# EUROPÄISCHE PATENTSCHRIFT

(11) **EP 3 678 785 B1**
(45) Veröffentlichungstag und Bekanntmachung des Hinweises auf die Patenterteilung: **23.10.2024**
(21) Anmeldenummer: 18759605.1
(22) Anmeldetag: 22.08.2018
(51) Int. Cl.: B03C 1/033, B03C 1/18, B03C 1/06, B23Q 11/00, B03C 1/28

(54) **VERFAHREN UND VORRICHTUNG ZUR SPANABHEBENDEN ERZEUGUNG ODER BEARBEITUNG EINES WERKSTÜCKS MIT ANSCHLIESSENDER SPANABFUHR**
METHOD AND DEVICE FOR THE CHIP-REMOVING PRODUCTION OR MACHINING OF A WORKPIECE WITH SUBSEQUENT CHIP DISCHARGE
PROCÉDÉ ET DISPOSITIF DE PRODUCTION OU D'USINAGE PAR ENLÈVEMENT DE COPEAUX D'UNE PIÈCE AVEC ÉVACUATION DE COPEAUX FINALE

(30) Priorität: 07.09.2017 DE 102017008420
(43) Veröffentlichungstag der Anmeldung: 15.07.2020
(73) Patentinhaber: Gleason-Pfauter Maschinenfabrik GmbH, 71636 Ludwigsburg (DE)
(72) Erfinder: WEPPELMANN, Edgar, 71679 Asperg (DE)
(74) Vertreter: Leinweber & Zimmermann
(86) Internationale Anmeldenummer: PCT/EP2018/072692
(87) Internationale Veröffentlichungsnummer: WO 2019/048240

(56) Entgegenhaltungen:
- WO-A2-2015/036098
- DE-A1- 1 935 337
- DE-A1- 2 418 224
- JP-A- S5 669 059
- JP-A- S61 297 054
- US-A- 3 834 542
- US-A- 4 370 225
- US-A- 6 056 879

## Beschreibung

Die Erfindung betrifft ein Verfahren zur spanabhebenden Erzeugung oder Bearbeitung eines Werkstücks gemäß dem Oberbegriff von Anspruch 1 sowie eine Spanabfuhreinrichtung gemäß dem Oberbegriff von Anspruch 10.

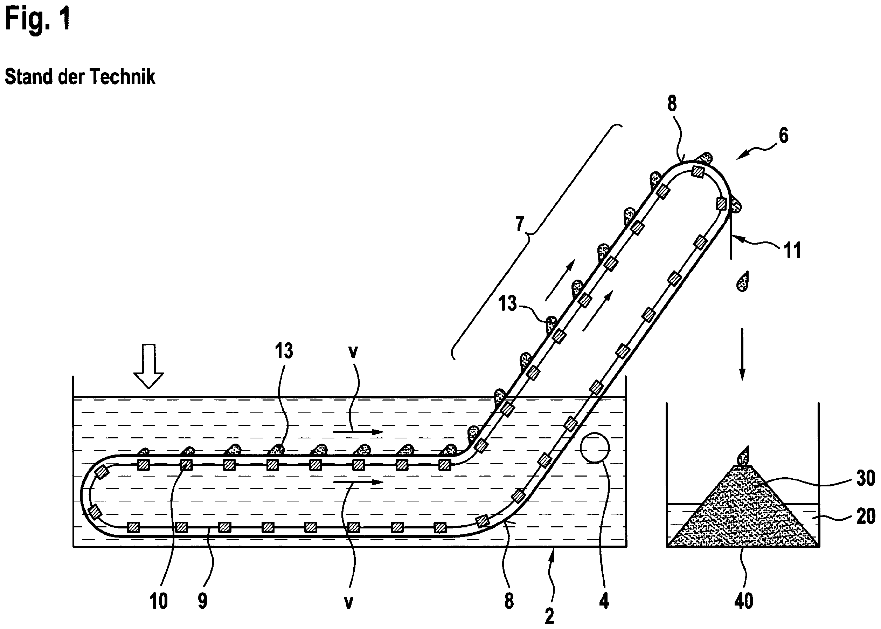

So werden zur Schmierung und/oder Kühlung der Bearbeitung eine Flüssigkeit, im Weiteren auch Kühlmittel genannt, wie beispielsweise Öl oder andere teils synthetische Kühl- oder Schmiermittel oder auf Emulsionen basierender flüssiger Form eingesetzt. Bei der Bearbeitung entsteht dann im weitesten Sinne ein Gemisch aus Spänen und Kühlmittel. Zu dessen Trennung werden die Späne häufig mittels eines Magnetband-Späneförderers aus der Maschine entfernt. Die grundlegende Arbeitsweise eines Magnetband-Späneförderers ist dem Fachmann bekannt und im Übrigen weiter unten auch nochmals mit Bezug auf Fig. 1 erläutert. Der Großteil des von den dem Gemisch entrissenen Spänen bzw. Spanansammlungen mitgenommenen Kühlmittels läuft dabei in die Maschine zurück, so dass diese einen Kühl-/Schmiermittelkreislauf aufrechterhalten kann.

Die Hersteller von Magnetband-Späneförderern optimieren den Flüssigkeitsrückstrom dabei durch die ihnen zur Verfügung stehenden konstruktiven und Prozess-Parameter des Späneförderers.

Zu diesen Parametern gehört zum einen die Länge des Abfuhrbereichs in Form eines aus dem Kühlmitteltank herausstehenden, feststehenden schrägen Oberfläche. Je länger dieser Abfuhrbereich gewählt ist, umso mehr Zeit verbleibt für das Ablösen des Kühlmittels aus den Spanansammlungen und seinem Rückstrom zu dem Kühlmitteltank. Insbesondere wenn die Förderung des Magnetband-Späneförderers gelegentlich unterbrochen wird, ist ein langer Abfuhrbereich von Vorteil, da mehr Zeit für das Kühlmittelablösen aus den Spänen bleibt. Dieser Vorteil ist jedoch abzuwägen gegenüber einem erhöhten Materialbedarf bei der Herstellung des Späneförderers, und einer erforderlichen größeren Aufstellfläche.

Auch der Anstellwinkel, mit dem die schräge Abfuhrfläche des Späneförderers gegenüber der Horizontalen angestellt ist, kann in gewissem Umfang variiert werden. Selbstverständlich erhöht sich mit steilerem Anstellwinkel die Hangabtriebskraft und damit sowohl der Ablöseprozess des Kühlmittels aus den Spanansammlungen wie auch die Rückstromgeschwindigkeit.

Die Breite der Abfuhrfläche bzw. Abfuhrbahn ist ebenfalls ein zur Verfügung stehender konstruktiver Parameter zur Optimierung, insbesondere für die Einhaltung der erforderlichen Fördermenge, indem eine größere Breite bei vorausgesetztem gleichen Querschnitt der Spanansammlungen ein Herabsetzen der Fördergeschwindigkeit erlaubt und damit dem Kühlmittel mehr Rückströmzeit. Andersherum betrachtet erlaubt dies eine Verringerung des Querschnitts der Spanansammlungen im Falle einer beibehaltenen Fördergeschwindigkeit, wonach die Spanansammlungen geringeren Querschnitts das in ihnen enthaltene Kühlmittel besser abgeben können, als dies bei einem größeren Querschnitt der Ansammlungen der Fall wäre. Jedoch ist üblicherweise auch der Breite des Späneförderers aus konstruktiven Gründen des Maschinenaufbaus eine Grenze gesetzt, abgesehen von einem höheren Materialaufwand.

Ein weiterer nutzbarer konstruktiver Parameter ist der Abstand der Magnete im Späneförderer. Bei gleicher Fördergeschwindigkeit führt ein verringerter Abstand der umlaufenden Magnete zu einer Verringerung des Querschnitts der Spanansammlungen und somit wiederum zu einer Verbesserung der Abgabe des Kühlmittels. Bei gleicher Späneabfuhrmenge des umlaufenden Förderers erfordert dieses jedoch eine größere Anzahl von Magneten und damit einen höheren Materialaufwand.

Mit der Erhöhung der Fördergeschwindigkeit als Prozessparameter kann ebenfalls ein geringerer Querschnitt der Spanansammlungen erreicht werden und somit eine verbesserte Abgabe des Kühlmittels, allerdings verringert sich dadurch auch die für den Rückstrom verfügbare Zeit, so dass auch hier ein geeigneter Kompromiss zu finden ist und die Fördergeschwindigkeit nicht beliebig erhöht werden kann.

Abhängig vom Einsatzgebiet des Magnetband-Späneförderers, das auch die erforderliche Förderrate bestimmt, werden die vorgenannten Parameter geeignet aufeinander abgestimmt, um die Spanansammlungen möglichst kühlmittelfrei am Ende des Abfuhrbereiches abzugeben.

Eine dennoch verbleibende Restmenge an Kühlmittel, die unvermeidlich mit den Spänen über den Abfuhrbereich hinaus ausgetragen wird, kann bei Bedarf mittels eines geeigneten nachgeschalteten Trennungsprozesses von den gesammelten Spänen getrennt werden, indem sie etwa aus einem Spänebehälter absickern gelassen und abgelassen wird oder ggf. noch ausgepresst oder auszentrifugiert wird. Dieses zurückgewonnene Kühlmittel kann dann ebenfalls der maschinellen Bearbeitung wieder zugeführt werden.

Das Dokument JP S61 297054 A offenbart eine Vorrichtung und ein Verfahren des Standes der Technik zum Trennen von magnetischen Verarbeitungsabfällen, die in aus spanender Werkstückfertigung stammenden Bearbeitungsflüssigkeiten enthalten sind.

Der Erfindung liegt die Aufgabe zugrunde, das Verfahren der eingangs genannten Art weiter zu verbessern.

Das ist in verfahrenstechnischer Hinsicht durch eine Weiterbildung des Verfahrens der eingangs genannten Art erreicht, die im Wesentlichen dadurch gekennzeichnet, dass der Rückstrom aus der Abfuhrbahn heraus ausgelenkt wird und gegebenenfalls die Abfuhrbahn wenigstens eine Stelle aufweist, in welcher den abgeführten Spänen zeitweise ihre abstützende Auflage entzogen ist.

Dabei beruht die Erfindung auf der Erkenntnis, dass ein insbesondere bei gerollten Spänen, wie oft bei der maschinellen Bearbeitung metallischer Werkstücke erzeugt, und insbesondere Flüssigkeiten mit einer vergleichsweise hohen Viskosität der Anteil der mit den Spänen ausgetragenen Flüssigkeit in einem Umfang festzustellen ist, der den Verzicht auf ein ggf. aufwändiges Wiedergewinnungsverfahren nicht mehr gerechtfertigt erscheinen lässt, so dass die oben angesprochene aufeinander abgestimmte Auswahl der verfügbaren Parameter für den Späneförderer aufs Äußerste zu optimieren wäre. Des Weiteren beruht die Erfindung auf der Erkenntnis, dass die vom Fachmann bislang gewohnte Optimierung der oben erläuterten Parameter nicht zu einer befriedigenden Lösung führt.

Gemäß der Erfindung wird dagegen unabhängig von günstig eingestellten Parameter-Konstellationen eine Beeinflussung der Abfuhrbahn und des Kühlmittelrückstroms vorgenommen, durch welche die von den Spänen ausgetragene Kühlmittelmenge nochmals weitergehend in zufriedenstellender Weise verringert werden kann. So wird durch die Auslenkung des Rückstroms aus der Abfuhrbahn erreicht, dass eine Wiederaufnahme des bereits rückströmenden Kühlmittels von nachrückenden Späneansammlungen ganz, überwiegend, oder wenigstens teilweise vermieden werden kann, wodurch die nachfolgenden Späneansammlungen das Ende der Abfuhrbahn in trockenerem Zustand erreichen können. Indem den abgeführten Spänen zeitweise ihre abstützende Auflage entzogen wird, sind die Spanansammlungen einer Sprungbewegung unterworfen, durch welche bzw. bei deren Landung die Abgabe der Flüssigkeit aus den Späneansammlungen erhöht wird.

Die Abfuhrbahn kann sich dabei über eine gewisse Breite erstrecken, die der Breite eines herkömmlichen Magnetband-Späneförderers entsprechen kann; somit ist die Abfuhrbahn eher flächig als linienartig.

Bevorzugt ist vorgesehen, dass die magnetische Krafteinwirkung auf die Spanansammlungen durch sich entlang der Abfuhrbahn in Abfuhrrichtung bewegende erste Bereiche mit starkem Magnetfeld erfolgt, die durch zweite Bereiche mit geringerem Magnetfeld getrennt sind. Dies wird beispielsweise durch eine beabstandete Anordnung von (quer zur Abfuhrrichtung) länglichen Magneten an einem umlaufenden Band erreicht, wie bei einem herkömmlichen Magnetband-Späneförderer.

Erfindungsgemäß ist ein Rückstrombereich für die rückströmende Flüssigkeit (Kühlmittel) in Schwererichtung unter der Abfuhrbahn angeordnet.

In einer besonders bevorzugten Ausgestaltung sind wenigstens zwei Auslenkstellen entlang eines Abfuhrweges vorgesehen, und das Verhältnis β aus dem Abstand zweier aufeinanderfolgender Auslenkstellen in Abfuhrrichtung zu dem Abstand zweier aufeinanderfolgender erster Bereiche in Abfuhrrichtung bevorzugt kleiner ist als 1/(1+γ α), wobei der dimensionslose Parameter (Faktor) γ wenigstens 1/5, bevorzugt wenigstens 1/3, insbesondere wenigstens 1/2 beträgt und wobei α das Verhältnis von der Geschwindigkeit der Bewegung der ersten Bereiche zu der Rückströmgeschwindigkeit der Flüssigkeit ist. Bei die ser Gestaltung wird eine zufriedenstellend geringe Austragmenge festgestellt. Dabei ist auch vorgesehen, dass γ größer 3/5, insbesondere größer 4/5 ist, insbesondere die 1 erreicht oder sogar darüber hinausgeht. In konkreten Gestaltungen kann insbesondere für hochviskose Kühlmittel (kinematische Viskosität höher 50 mm²/s (bei 40° C gemessen)) vorgesehen sein, dass β kleiner ist als 1/8, insbesondere als 1/10. Für mittelviskose Kühlmittel (kinematische Viskosität im Bereich 5-50 mm²/s) gelangt man bereits mit β kleiner 1/4, insbesondere β kleiner 1/6 zu vernünftigen Ergebnissen. Bei niedrigviskosen Kühlmitteln (kinematische Viskosität kleiner 5 mm²/s) mag auch ein β kleiner 0,8 zu vernünftigen Ergebnissen führen.

In einer bevorzugten Ausführungsform wird das Verfahren mit Kühlmitteln einer kinematischen Viskosität von bevorzugt größer 2 mm²/s, weiter bevorzugt größer 3 mm²/s, insbesondere größer oder gleich 5 mm²/s durchgeführt. Insbesondere bei speziellen Anwendungen in der Verzahnungsbearbeitung wird es jedoch bevorzugt, dass die kinematische Viskosität des Kühlmittels nicht größer ist als 50 mm²/s, bevorzugt nicht größer als 44 mm²/s, insbesondere nicht größer als 36 mm²/s.

Hinsichtlich einer durchschnittlichen Steigung der Abfuhrbahn (welche im Wesentlichen die Größe der wirkenden Hangabtriebskraft bestimmt) sind Werte von 35° oder größer bevorzugt, weiter bevorzugt Werte von 40° oder größer, insbesondere von 50° oder größer. Dagegen ist es zweckmäßig, wenn die durchschnittliche Steigung der Abfuhrbahn nicht größer ist als 85°, weiter bevorzugt nicht größer als 75°, insbesondere nicht größer als 65°.

Hinsichtlich der Fördergeschwindigkeiten (Geschwindigkeit, mit der sich die Magnete/Bereiche starken Magnetfelds bewegen) können geeigneterweise Geschwindigkeiten von größer 0,2 m/min, weiter bevorzugt größer 0,35 m/min, insbesondere größer oder gleich 0,5 m/min herangezogen werden. Allerdings wird es bevorzugt, wenn die Fördergeschwindigkeit nicht größer ist als 3 m/min, weiter bevorzugt nicht größer als 2 m/min, insbesondere nicht größer als 1 m/min.

Für die Länge der Abfuhrbahnen kommen sinnvolle Mindestlängen von 30 cm oder mehr, bevorzugt 60 cm oder mehr, insbesondere 1 m oder mehr in Betracht. Andererseits ist es bevorzugt, wenn die Länge nicht größer ist als 3 m, weiter bevorzugt nicht größer als 2,50 m, insbesondere nicht länger als 2 m. Hinsichtlich der Breite der Abfuhrbahn werden Werte von wenigstens 10 cm, bevorzugt wenigstens 20 cm, insbesondere wenigstens 25 cm bevorzugt. Dabei wird es weiter bevorzugt, dass die Breite nicht größer ist als 80 cm, weiter bevorzugt nicht größer als 65 cm, insbesondere nicht größer als 50 cm. Bei sehr niedrigviskosen Kühlmitteln sind die Bedingungen an β nicht so scharf, hier kann β auch durchaus lediglich kleiner sein als 4, 3 oder 2.

In einer weiteren bevorzugten Ausführungsform ist vorgesehen, dass diese Bedingung β < 1/(1 + γα) zu Beginn der Abfuhrbahn vorgesehen ist, die Bedingung kann jedoch auch entlang der gesamten Abfuhrbahn zwischen zwei aufeinanderfolgenden Auslenkstellen gegeben sein. Die Abfuhrbahn beginnt mit dem Austritt aus der Flüssigkeitsansammlung. Vorrichtungstechnisch würde man eine konstruktive Realisierung bevorzugt ab dem vorgesehenen Minimalpegel im Tank oder bereits darunter vornehmen. Eine reguläre Anordnung der Auslenkstellen entlang der Förderrichtung wie auch quer zur Förderrichtung ist möglich und von der Herstellung her einfacher, jedoch nicht erforderlich. So kann Anzahl, Form und Anordnung der Auslenkstellen sowohl in Abfuhrrichtung als auch quer dazu (in Breitenrichtung) variieren.

In einer möglichen Gestaltung ist eine Auslenkstelle einer Auflageentzugsstelle zugeordnet, insbesondere jede Auslenkstelle einer Auflageentzugsstelle. Die aufgrund des Sprungs hier verstärkt abgegebene Kühlmittelmenge kann somit zeitnah und rasch ausgelenkt werden.

Die Erfindung lässt sich auch auf mehreren hintereinandergeschalteten Späneförderern einsetzen.

Erfindungsgemäß mündet die rückströmende Flüssigkeit (Kühlmittel) in einen Rückstromraum ein, und die Abfuhrbahn ist von einer oder mehreren Einmündungen durch eine Barriere getrennt. Damit wird weitestgehend vermieden, dass eine größere Spänekonzentration den Rückstromraum erreicht und ggf. verstopft oder die Einmündungen verstopft. In einer möglichen Ausgestaltung sind einer oder mehrere Abschnitte vorgesehen, in denen von einer Auslenkstelle rückströmende Flüssigkeit räumlich von einer von einer in Abfuhrrichtung nachfolgenden Auslenksteile rückströmenden Flüssigkeit getrennt parallel zu dieser zurückströmt, wobei die Abfuhrbahn an diesen Parallelstromabschnitten insbesondere einen einer Auflageentzugsstelle vorgelagerten Rampenabschnitt aufweist.

Der Rampenabschnitt kann dabei die oben erläuterte Barriere bilden, das rückströmende Kühlmittel von der in Abfuhrrichtung nachfolgenden Ablenkstelle kann dabei bereits in dem Rückstromraum erfolgen. Das früher rückströmende Kühlmittel mag den Rückstromraum erst etwas stromabwärts erreichen.

Die durchschnittliche zusätzliche Steigung der Rampenabschnitte gegenüber der Grundsteigung des Förderers mag wenigstens 5°, bevorzugt wenigstens 12°, insbesondere wenigstens 20° betragen. Je nachdem, wie hoch die Grundsteigung des Förderers bereits ist, ist es jedoch bevorzugt, dass die durchschnittliche zusätzliche Steigung der Rampenabschnitte nicht größer ist als 50°, weiter bevorzugt nicht größer als 45°, insbesondere nicht größer als 40°. Für die Sprunghöhe an den Sprungstellen (gemessen orthogonal zur durch den Förderer bestimmten Förderfläche (Fläche 28 in den Figuren)) wird es bevorzugt, dass diese wenigstens 1 mm beträgt, weiter bevorzugt wenigstens 2 mm, insbesondere wenigstens 3 mm. Andererseits sollten die Sprünge nicht größer werden als 15 mm, weiter bevorzugt nicht größer als 12 mm, insbesondere nicht größer als 9 mm. Ein durchaus geeigneter Bereich liegt zwischen 4 und 8 mm Sprunghöhe.

In vorrichtungstechnischer Hinsicht ist bereitgestellt eine Maschine, insbesondere Verzahnungsmaschine zur spanabhebenden Erzeugung oder Bearbeitung eines Werkstücks, insbesondere einer Verzahnung an einem Werkstück mittels eines Bearbeitungswerkzeugs, insbesondere Verzahnungswerkzeugs, mit einer Zuführeinrichtung für eine zur Schmierung und/oder Kühlung der Bearbeitung eingesetzte Flüssigkeit, einem Sammelbereich, in dem sich die mit den bei der Bearbeitung entstehenden Spänen vermengte Flüssigkeit sammelt, und einer Spanabfuhreinrichtung zur Abführung der Späne mittels einer magnetischen Krafteinwirkung entlang einer Abfuhrbahn entgegen der Hangabtriebskraft, die einen durch die Hangabtriebskraft verursachten Rückstrom der von den abgeführten Spänen mitgeführten Flüssigkeit erlaubt, wobei die Verzahnungsmaschine die im Wesentlichen dadurch gekennzeichnet ist, dass die Spanabfuhreinrichtung wenigstens eine Auslenkstelle aufweist, an der der Flüssigkeitsrückstrom aus der Abfuhrbahn heraus ausgelenkt wird und/oder wenigstens eine Auflageentzugsstelle aufweist, an welcher den abgeführten Spänen zeitweise ihre abstützende Auflage entzogen ist.

Die Vorteile der erfindungsgemäßen Maschine ergeben sich aus den Vorteilen des oben erläuterten Verfahrens, ebenfalls diejenigen der Weiterbildungen der Maschine in Form der abhängigen Maschinenansprüche. Insoweit Späne auch bei z.B. im Rahmen von Verzahnungsbearbeitungen zusätzlich vorgenommenen spanenden Metallbearbeitungen generiert werden, wie Bohren oder Drehen von Werkstücken, so ist das oben erläuterte Abfuhrprinzip ebenfalls anwendbar, wie auch für generell unterschiedliche Arten von maschinellen Bearbeitungen, bei denen metallische Späne in einem Gemisch mit einem Kühlmittel anfallen.

Konstruktiv weist die Spanabfuhreinrichtung bevorzugt eine erste feststehende schräge Fläche als Spanabfuhrfläche, auf der die abzuführenden Späne nach oben wandern, und eine zweite feststehende schräge Fläche auf, auf der die rückströmende Flüssigkeit nach unten läuft. Bevorzugt ist die erste von der zweiten demontierbar, insbesondere abnehmbar.

Des Weiteren wird auch unter Schutz gestellt eine die wesentlichen Aspekte wie oben erläutert aufweisende Spanabfuhreinrichtung, geeignet für eine spanend arbeitende Maschine, insbesondere Verzahnungsmaschine, wie auch ein Aufsatz zur Bildung einer Spanabfuhreinrichtung, welcher ebenfalls die relevanten Merkmale aufweist und durch Aufsetzen auf insbesondere bereits herkömmliche Magnetband-Späneförderer eine Spanabfuhreinrichtung mit den oben erläuterten Merkmalen bildet. Verfahrenstechnisch werden auch die Trennungsschritte des Verfahrens unabhängig von der Spänequelle geschützt.

Die Abmessung des Abstands zwischen den Bereichen (Magneten) und der Spanabfuhrfläche ist so gewählt, dass die magnetische Kraft noch ausreicht, um die Späneansammlung entlang der Abfuhrbahn zu bewegen, ohne dass diese hängen bleiben und/oder zurückrutschen. Zum anderen derart, dass der dadurch gebildete Rückstromraum den Rückstrom volumenmäßig aufnehmen kann.

Weitere Merkmale, Einzelheiten und Vorteile der Erfindung ergeben sich aus der nachfolgenden Beschreibung mit Bezug auf die beigefügten Figuren, von denen
- Fig. 1: das Grundprinzip eines Magnetband-Späneförderers zeigt,
- Fig. 2: die Flächigkeit des Magnetband-Späneförderers aus Fig. 1 zeigt,
- Fig. 3: eine Seitenansicht eines Abschnitts einer Ausführungsform einer Spanabfuhreinrichtung zeigt,
- Fig. 4: Strömungswege einer rückströmenden Flüssigkeit für die Ausführungsform von Fig. 3 zeigt,
- Fig. 5a, b: Modifikationen der Ausführungsform von Fig. 3 zeigen,
- Fig. 6: weitere Modifikationen der Ausführungsform von Fig. 3 zeigt,
- Fig. 7: einen Aufsatz mit Funktionen der Spanabfuhreinrichtung der Ausführungsform von Fig. 3 zeigt,
- Fig. 8: ebenfalls einen Aufsatz mit Funktionen einer Spanabfuhreinrichtung zeigt, und
- Fig. 9: schematisch eine Verzahnungsmaschine mit einer Spanabfuhreinrichtung zeigt.

Zunächst wird anhand von Fig. 1 das Grundprinzip einer Spanabfuhreinrichtung erläutert, welches einen Magnetband-Späneförderer enthält, wie er häufig bei Verzahnungsmaschinen zum Einsatz kommt, die eine maschinelle Bearbeitung metallischer Werkstoffe mit Kühlmittel ausführen. An einem Bodenbereich einer im Weiteren nicht dargestellten Maschine ist ein mit einem Auslass 4 versehener Tank 2 dargestellt, der beispielsweise an einem Bodenbereich der Maschine angeordnet sein könnte. Der Tank ist mit einem Kühlmittel gefüllt, das zum Kühlen und/oder Schmieren der zugehörigen Verzahnungsbearbeitung eingesetzt wird und enthält somit auch die bei der Bearbeitung anfallenden Späne. Der Pfeil links in Fig. 1 deutet die im Betrieb der Verzahnungsmaschine fortlaufende Zufuhr des Kühlmediums mit metallischen magnetisierbaren Spänen an.

In dem Tank 2 ist ein Förderer 6 teilweise aufgenommen, indem ein horizontaler Bereich des Förderers in das Kühlmittel eingetaucht ist und ein daran anschließender schräg ansteigender Bereich 7 des Förderers 6 ab Erreichen der Füllhöhe aus dem Kühlmedium herausragt. Der Förderer 6 fördert die Metallspäne mit Geschwindigkeit V über den schrägen Bereich 7 aus dem Tank 2 heraus schräg nach oben, bis sie nach Durchlaufen des Umkehrpunkts am freien Ende des Förderers 6 in einen darunter aufgestellten Spanbehälter 40 fallen. Dazu weist der Förderer 6 eine feststehende Oberfläche 8 auf, auf der die Metallspäne aufliegen, und ein endlos umlaufendes Band 9, welches hier in regelmäßigen Abständen mitbewegte Magnete 1.0 aufweist.

Aufgrund der magnetischen Krafteinwirkungen sammeln sich Metallspäne gegenüberliegend den umlaufenden Magneten 10 an und die Ansammlungen bewegen sich auf der feststehenden Oberfläche 8 mit den Magneten 10 und deren Geschwindigkeit mit. Am Abwurf 11 können die Spanansammlungen den zurücklaufenden Magneten nicht mehr nahe genug folgen und fallen daher aufgrund der nachlassenden magnetischen Krafteinwirkung in den Spänebehälter 40. Das Kühlmittel, welches die Metallspanansammlungen beim Austritt aus dem Tank 2 noch mit sich führen und das von diesen fortlaufend abgegeben wird, läuft dabei aufgrund der Hangabtriebskraft entlang der feststehenden Oberfläche 8 im schräg ansteigenden (abfallenden) Bereich wieder in Richtung auf den Tank 2 zurück. Unvermeidlich bis zum Abwurf der Metallspäne ausgetragenes Rest-Kühlmittel 20 ist dann ebenfalls wie die Späne 30 im Spänebehälter 12 enthalten, wie in Fig. 1 zu Anschauungszwecken idealisiert dargestellt ist.

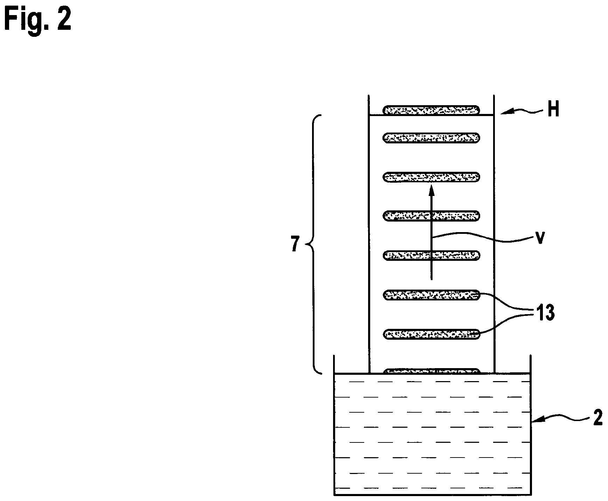

In Fig. 2 ist in einer schematischen weiteren Seitenansicht parallel zur Horizontalrichtung in Fig. 1 der schräg bis zu einer Höhe H aus dem Tank 2 herausragende Bereich 7 dargestellt, so dass die Gestaltung des Förderers 6 als in der Breitenrichtung ausgedehntes Band besser erkennbar ist.

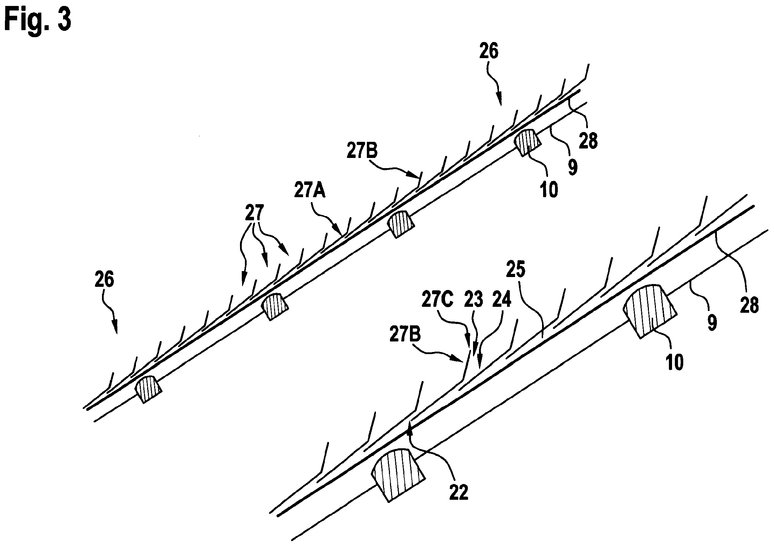

Fig. 3 zeigt einen Abschnitt einer Spanabfuhreinrichtung gemäß einer ersten Ausführungsform nebst einer Darstellung eines vergrößerten Teils davon, bei der ebenfalls ähnlich wie in Fig. 1 dargestellt ein endlos umlaufendes Band 9 mit voneinander beabstandeten Magneten 10 vorgesehen ist. Die mit der feststehenden Oberfläche 8 aus Fig. 1 vergleichbare feststehende Oberfläche 28 dient jedoch nicht mehr als Auflagefläche für die Ansammlungen aus Metallspänen und Kühlmittel, die den Magneten 10 in deren Aufwärtsbewegung folgen, sondern als Fläche, entlang der sich aus den Metallspanansammlungen 13 lösendes Kühlmittel zurückströmt.

Die Metallspanansammlungen 13 bewegen sich dagegen auf einer Abfuhrbahn, die durch eine weitere Oberfläche 26 bestimmt ist. Diese Oberfläche 26 ist aus mehreren Lamellen 27 gebildet mit einem Grundabschnitt 27A, der sich im Wesentlichen parallel zur Bewegungsrichtung des Magnetbands 9 erstreckt, jedoch aufgrund einer schuppenartigen Anordnung zu den vorherigen und nachfolgenden Lamellen (geringfügig) steiler ansteigt. An den Grundabschnitt 27A schließt sich ein Rampenabschnitt 27B an, dessen freies Ende 27C in einer Abstandsrichtung orthogonal zur Förderrichtung des Bands 9 und in der Papierebene von Fig. 3 von dem Grundabschnitt 27A der nächsten Lamelle 27 beabstandet ist. Die Spanansammlung 13 wird von den Magneten 10 den Rampenbereich 27B hinaufgezogen, während sie sich darauf abstützt. Da sich die Magnete 10 weiterbewegen, folgt die Spanansammlung der Bewegung der Magnete 10 auch weiterhin und gelangt durch einen Sprung vom Ende 27C einer Lamelle 27 auf den Grundabschnitt 27A der nächsten Lamelle 27 wieder auf die die Spanansammlung stützende Auflage 26, Hier liegt somit eine Stelle der Abfuhrbahn vor, an der den abgeführten Spänen zeitweise ihre abstützende Auflage entzogen ist, also eine Auflagenentzugsstelle, die im nachfolgenden auch kurz als Sprungstelle bezeichnet wird. Durch einerseits den Aufstieg im zusätzlich steileren Rampenbereich 27B, aber insbesondere durch den Sprung an der Sprungstelle 23 und das nachfolgende Aufschlagen bei 24 auf der nachfolgenden Lamelle 27 wird mehr Kühlmittel aus der Metallspanansammlung gelöst und kann in Richtung Kühlmitteltank zurückströmen.

Da der Rampenbereich 27B die nachfolgende Lamelle 27 orthogonal zur Oberfläche 28 gesehen überlappt, liegt der Bereich unter dem Rampenbereich 27B bereits rückstromabwärts der Auslenkstelle für das rückströmende Kühlmittel aus der Abfuhrbahn, entlang der die Spanansammlungen nach oben laufen, da unter dem Rampenbereich 27B keine Spanansammlungen mehr nach oben wandern.

Wie aus Fig. 3 zu erkennen ist, ist der Übergang zwischen zwei aufeinanderfolgenden Lamellen 27 geöffnet, jedenfalls teilweise (über die Breite des Bandes 9 gesehen). Daher gelangt das rückströmende Kühlmittel auf die Fläche 28 und kann entlang dieser in den Kühlmitteltank zurückströmen. Auf diesem Rückstromweg begegnet das rückströmende Kühlmittel keinen nachfolgend abgeführten Metallspanansammlungen mehr, da diese nicht auf der Fläche 28, sondern auf der Fläche 26 mit den Lamellen 27 erfolgt. Eine Mitnahme rückströmenden Öls durch nachfolgende Metallspanansammlungen findet im Bereich der Oberfläche 28 nicht mehr statt. Der Einmündungsbereich von einer Lamelle 27 in den Rückstrom auf der Fläche 28 ist durch die vorhergehende Lamelle 27 geschützt, durch ihren Grundabschnitt 27A und/oder Rampenabschnitt 27B.

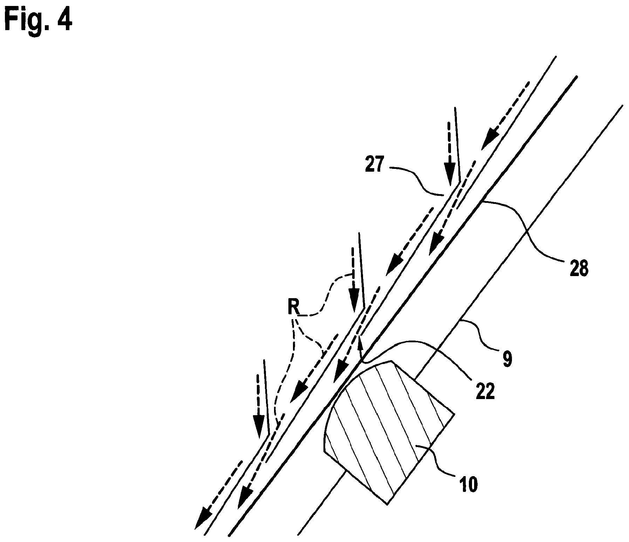

Der Rückstrom R des Kühlmittels beispielsweise in Form eines nach unten fließenden Kühlölfilms im Falle der Verwendung von Öl als Kühlmittel ist in Fig. 4 nochmals vergrößert durch die gestrichelten Pfeile dargestellt. Jedenfalls ein Anteil des rückströmenden Kühlöls wird dabei durch die Auslenkung des Rückstroms aus der Abfuhrbahn der Metallspanansammlungen nicht mehr auf diese treffen können. Bei bevorzugter Gestaltung der Eigenschaften des Bandes 9 mit den Magneten 10 und bei passender Wahl der Fördergeschwindigkeit mag auch nahezu die gesamte innerhalb einer Lamelle 27 abgelöste Kühlölmenge die Auslenkstelle erreichen, bevor die nachfolgende Metallspanansammlung diese bei ihrer Bewegung entlang der durch die Lamellen 27 bestimmten Abfuhrbahn erreicht.

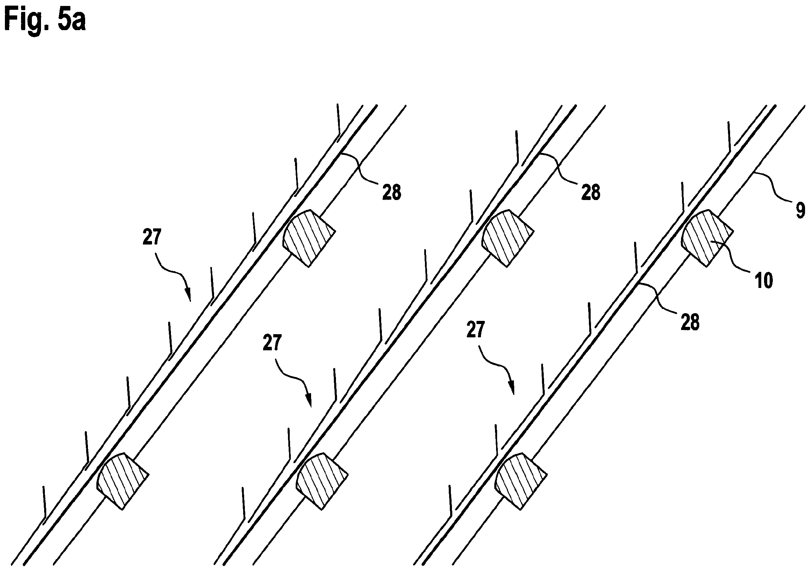

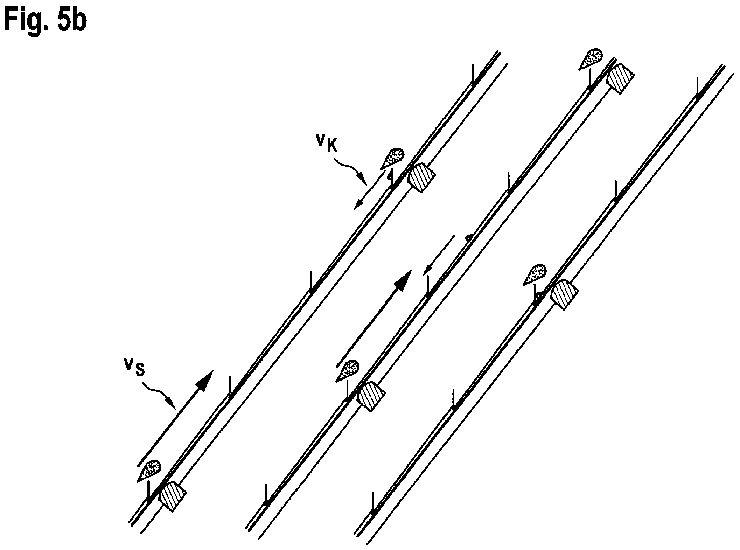

Fig. 5a zeigt noch Modifikationen der Darstellung von Fig. 3 hinsichtlich der Gestaltung der Öffnungen zwischen aufeinanderfolgenden Lamellen 27, wobei die in Fig. 5 rechts dargestellte Variante keine Schuppenanordnung der Lamellen mehr beinhaltet, aber noch eine schützende Überlappung der Einmündung in den Rückstrom auf der Oberfläche 28 durch den Rampenbereich 27B.

Fig. 5b zeigt ein Beispiel einer Ausführungsform ähnlich Fig. 3, bei dem das Verhältnis 1/β aus dem Abstand zweier aufeinanderfolgender Magnete 10 zu dem Abstand zweier aufeinanderfolgender Auslenkstellen etwa 3 beträgt und bei dem das Verhältnis α von der Geschwindigkeit der Bewegung der Magnete 10 zu der Rückstromgeschwindigkeit des Kühlmittels etwa 2 beträgt. Dabei zeigt Fig. 5b nur eine Momentaufnahme eines Vorgangs der Bewegungen der Spanansammlungen 13 über den Magneten 10 und der Rückströmungen des Kühlmittels, der auf allen Bereichen aller Lamellen 27 fortlaufend stattfindet.

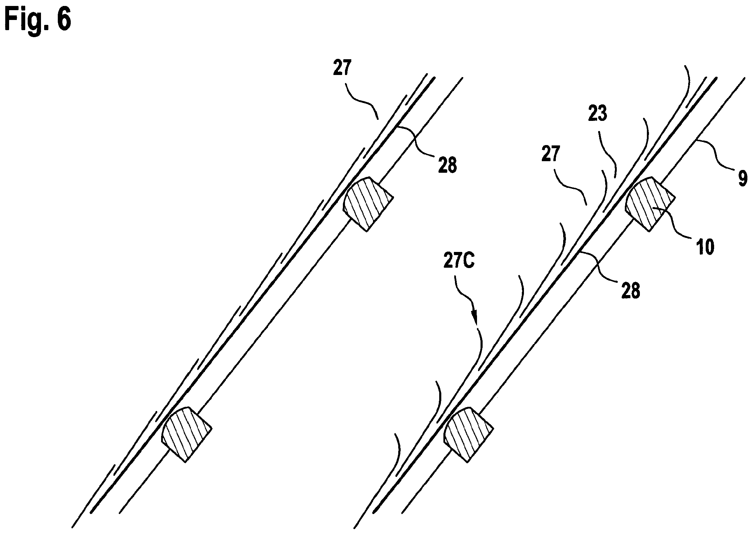

Fig. 6 zeigt noch weitere Modifikationen; in der linken Darstellung wird auf den Rampenbereich 27B verzichtet, so dass kaum noch eine Auflageentzugsstelle vorliegt, da die Spanansammlung über die aufgrund der Überlappung aufeinanderfolgender Lamellen 27 gebildete Stufe nahezu kontinuierlich abgestützt hinweggeführt wird. Bei der rechten Darstellung von Fig. 6 ist dagegen die Rampenform nicht linear, sondern ansteigend. Dies führt zu einem ansteigenden Widerstand beim Anstieg einer Spanansammlung auf der Rampe, wodurch das Folgen der Metallspanansammlungen gegenüber der Bewegung des Magneten 10 zunehmend gehemmt wird. Der Metallspanhaufen verbleibt geringfügig länger im Bereich des Lamellenendes 27C, bevor sie zum Sprung an der Sprungstelle 23 gezwungen wird.

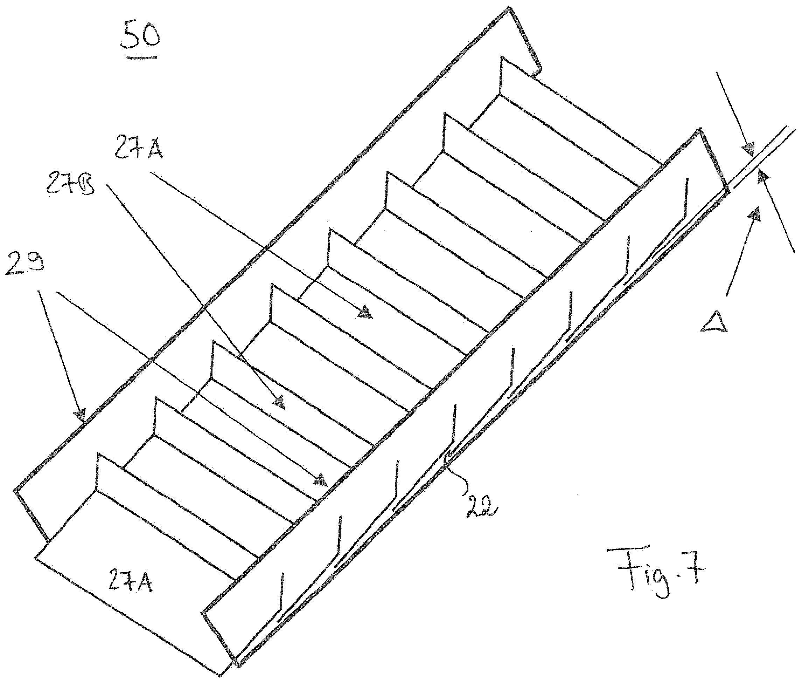

Fig. 7 zeigt eine Ausführungsform in Form eines Aufsatzes 50, der auf eine schräge Oberfläche, die beispielsweise die einzige feste Oberfläche zur Metallspanabfuhr eines herkömmlichen Magnetband-Späneförderers sein kann, aufgesetzt werden kann. Dabei verbleibt ein Abstand Δ zwischen der Unterseite des Grundabschnitts 27A zur darunterliegenden Fläche 28. Die Lamellen 27 sind links und rechts von Seitenrändern 29 begrenzt.

Damit die Spanansammlungen möglichst ungehindert auf den ersten unteren Grundabschnitt 27A des in Fig. 7 dargestellten Aufsatzes 50 auflaufen können und sich nicht an der unteren Kante dieses ersten unteren Grundabschnitts 27A verhaken und aufstauen, muss dessen untere Kante an der Fläche 28 aufliegen. Alternativ kann auch ein separater Abschnitt auf der Fläche 28 unterhalb der Kante des ersten unteren Grundabschnitts 27A montiert werden, mit seiner unteren Kante an der Fläche 28 anliegend und mit dem ersten unteren Grundabschnitt 27A überlappend. Auch ist es vorteilhaft zur Vormeidung eines Spänestaus, dass diese erste untere Kante unterhalb der minimal vorgesehenen Höhe des Kühlmittels im Kühlmitteltank liegt, da es innerhalb des Kühlmittels durch dessen Auftriebswirkung auf die Späne weniger leicht zu einem Spänestau an dieser ersten unteren Kante kommt, als außerhalb des Kühlmittels.

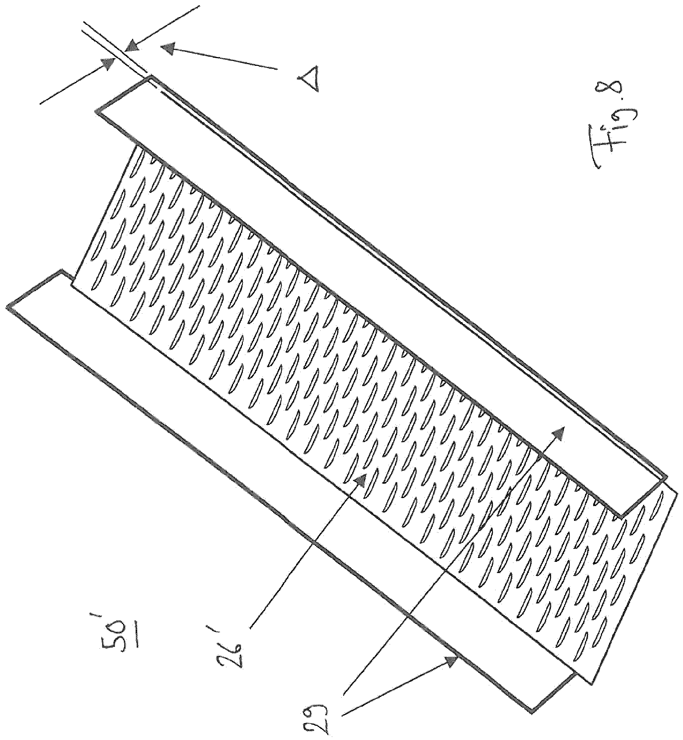

Fig. 8 zeigt eine alternative Gestaltung eines Aufsatzes 50', hier werden Ablenkstellen und Auslenkstellen in Form von gestanzten und aufgebogenen Öffnungen einer planaren Oberfläche gebildet. Wiederum besteht der Abstand Δ der Grundfläche 26' zur Fläche 28, die untere Kante der Grundfläche 26' liegt an der Fläche 28 an.

Die Gestaltung der die Abfuhrbahn bestimmenden Fläche 26, 26' kann beispielsweise durch eine Konfiguration von Blechstreifen realisiert werden. Wie oben bereits erläutert, können diese lamellenbildenden Blechstreifen z.T. etwas überlappend montiert werden, um ein Festsetzen der Späne oder einen Durchgang der Späne zwischen zwei Blechstreifen/Lamellen auf die darunterliegende Fläche 28 für den Flüssigkeitstransport zu erschweren.

Winkel und Höhe der Rampenbereiche sind derart zu wählen, dass es zu einem möglichst großen Sprung einzelner Späne und ihrer Ansammlungen kommt, die umlaufenden Magnete/Magnetfeldbereiche jedoch noch in der Lage sind, die einzelnen Späne und ihre Ansammlungen zuverlässig über alle Rampenabschnitte hinweg nach oben zu bewegen, d.h. dass die durch die Bewegung der Magnete bewirkte Kraft die entgegenwirkende Hangabtriebskraft überwiegt.

Zwischen zwei Blechstreifen/Lamellen liegt auch die Einmündung 22 für die rückströmende Flüssigkeit zum Einmünden in den Rückstromraum. Insbesondere bei höher viskosen Kühlmitteln wie z.B. Öl sind bevorzugt mehrere solche Einmündungen innerhalb einer Länge angeordnet, die dem Abstand zweier Magnete entspricht.

Bei der Gestaltung der Rampenbereiche 278 sind diverse Anordnungen möglich, wie auch aus den Figuren ersichtlich, etwa durchgehend rund gebogene Formen oder eine Kombination aus einem runden und einem geraden Bereich.

Der Rückströmbereich muss bezüglich der Abfuhrbahn nicht zwingend in Schwererichtung getrennt verlaufen, sondern könnte auch in Breitenrichtung getrennt verlaufen, d.h. neben der Abfuhrbahn oder zwischen zwei oder mehreren Abfuhrbahnen angeordnet sein. In diesem Fall, der nicht durch den beanspruchten Gegenstand abgedeckt ist, sollte das aus den Spanansammlungen austretende Kühlmittel diesem in Breitenrichtung von der Abfuhrbahn getrennt verlaufenden Rückströmbereich zugeführt werden. Dies kann z.B. dadurch geschehen, dass sich das aus den Spanansammlungen austretende und zurückströmende Kühlmittel hinter Auflageentzugsstellen sammelt und durch eine zur Spanabfuhrrichtung winkelige Anordnung der Auflageentzugsstellen seitlich in die Rückströmbereiche geleitet wird.

In die Oberfläche 28 eingesetzte, auf die Oberfläche 28 aufgesetzte oder in die Oberfläche 28 eingearbeitete Rampenabschnitte als Auflageentzugsstellen dienen dabei für die entlang der Abfuhrbahn bewegten Spanansammlungen als halbseitige Brückenbereiche zur Überbrückung der Kühlmittelströme, die sich hinter den Auflageentzugsstellen mit der dann erforderlichen Bewegungskomponente quer zur Förderrichtung bilden.

Auch wäre es denkbar, Rampenbereiche als Auflageentzugsstellen oder anders gestaltete Hindernisse der die Abfuhrbahn bestimmenden Fläche in einer Art Fischgrätenmuster zu gestalten, mit oder ohne, bevorzugt ohne Lücke zwischen den beidseitig schräg angebrachten Auflageentzugsstellen / Hindernissen des Fischgrätenmusters. Durch das mit der Spitze nach oben zeigende Fischgrätenmuster werden sich die Späne oder ihre Ansammlungen bei ihrer Wanderung nach oben im mittleren Bereich ihrer feststehenden schrägen Abstützfläche konzentrieren, während das Kühlmittel hinter den Kanten der Auflageentzugsstellen / Hindernisse entlang zum Rückstrombereich an beiden Rändern läuft und entlang diesem Rückstrombereich nach unten in den Flüssigkeitstank läuft.

Ferner wäre es denkbar, mehrere oben beschriebene Fischgrätenmuster mit den Spitzen nach oben parallel nebeneinander und seitlich beabstandet auf der Abfuhrbahn anzuordnen, sodass das Kühlmittel auch zwischen den parallel verlaufenden Abschnitten des Spanabfuhrbereichs nach unten in den Kühlmitteltank zurückfließen kann.

Für derartige Anordnungen sollten sich die umlaufenden Magnete nicht bis in den in Breitenrichtung von dem Spanabfuhrbereich getrennten Rückströmbereich hineinerstrecken, und/oder die nach oben wandernden Spanansammlungen sollten durch eine passende Anordnung der Auflageentzugsstellen / Hindernisse wie oben beschrieben so gelenkt werden, dass sie nicht im Rückströmbereich nach oben wandern können.

Es ist auch an Kombinationen der oben erläuterten Gestaltungen gedacht.

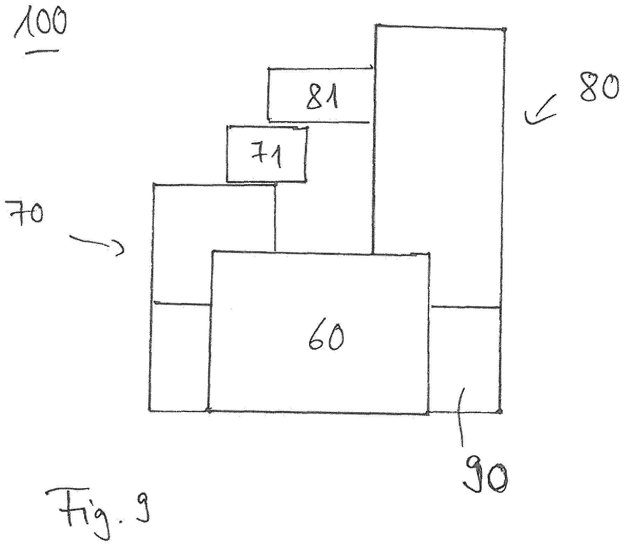

In Fig. 9 ist schematisch eine Verzahnungsmaschine 100 gezeigt, mit Maschinenbett 90, Werkzeugseite 80 mit schematisch dargestelltem Werkzeug 81 und Werkstückseite 70 mit schematisch dargestelltem Werkstück 71 sowie mit Spanabfuhreinrichtung 60. Beispielsweise könnte es sich bei der Verzahnungsmaschine 100 um eine Wälzschälmaschine handeln, oder auch um eine Wälzfräsmaschine oder andere spanabhebende Verzahnungsmaschinen.

Die Fläche 26',26 sowie die Lamellen 27 (wie auch Aufsatz 50, 50') sind bevorzugt von der Fläche 28 demontierbar angeordnet, was die Reinigung erleichtert.

Die Erfindung ist nicht auf die in den vorgenannten Beispielen dargestellten Spezifizierungen eingeschränkt. Vielmehr wird die Erfindung durch die nachfolgenden Ansprüche festgelegt.

## Patentansprüche

1. Verfahren zur spanabhebenden Erzeugung oder Bearbeitung eines Werkstücks, insbesondere einer Verzahnung an einem Werkstück (71) mittels eines Bearbeitungswerkzeugs, insbesondere Verzahnungswerkzeugs (81), bei dem zur Schmierung und/oder Kühlung der Bearbeitung eine Flüssigkeit (20) eingesetzt wird, die sich mit den bei der Bearbeitung entstehenden Spänen (30) vermengt und ansammelt, und bei dem die Späne aus der Ansammlung mittels einer magnetischen Krafteinwirkung entlang einer Abfuhrbahn entgegen der Hangabtriebskraft abgeführt werden, wobei aufgrund der Hangabtriebskraft ein Rückstrom der von den abgeführten Spänen mitgeführten Flüssigkeit erfolgt, wobei der Rückstrom aus der Abfuhrbahn heraus ausgelenkt wird,
**dadurch gekennzeichnet, dass** die rückströmende Flüssigkeit in einen in Schwererichtung unter der Abfuhrbahn angeordneten Rückströmraum (25) einmündet, und die Abfuhrbahn von einer oder mehreren Einmündungen (22) durch eine Barriere getrennt ist.

2. Verfahren nach Anspruch 1, bei dem die magnetische Krafteinwirkung durch sich entlang der Abfuhrbahn in Abfuhrrichtung bewegende erste Bereiche mit starkem Magnetfeld erfolgt, die durch zweite Bereiche mit geringerem Magnetfeld getrennt sind.

3. Verfahren nach Anspruch 2, bei dem wenigstens zwei Auslenkstellen (24) entlang des Abfuhrweges vorgesehen sind, und das Verhältnis aus dem Abstand zweier aufeinanderfolgender Auslenkstellen in Abfuhrrichtung zu dem Abstand zweier aufeinanderfolgender erster Bereiche in Abfuhrrichtung bevorzugt kleiner ist als 1/(1+γ α), wobei der Faktor γ wenigstens 1/5, bevorzugt wenigstens 1/3, insbesondere wenigstens 1/2 beträgt und α das Verhältnis von der Geschwindigkeit der Bewegung der ersten Bereiche zu der Rückströmgeschwindigkeit der Flüssigkeit ist.

4. Verfahren nach Anspruch 3, bei dem wenigstens zwei aufeinanderfolgende Auslenkstellen vorgesehen sind, die die in Anspruch 3 definierte Bedingung für ihren Abstand erfüllen, und insbesondere zwei solcher Auslenkstellen die ersten Auslenkstellen entlang der Abfuhrbahn sind.

5. Verfahren nach einem der vorhergehenden Ansprüche, bei dem die Abfuhrbahn wenigstens eine Stelle (23) aufweist, in welcher den abgeführten Spänen zeitweise ihre abstützende Auflage entzogen ist, insbesondere eine Mehrzahl von Auflageentzugsstellen (23) entlang der Abfuhrbahn vorgesehen ist.

6. Verfahren nach Anspruch 5, bei dem eine Auslenkstelle (24) jeweils einer Auflageentzugsstelle (23) zugeordnet ist.

7. Verfahren nach einem der vorhergehenden Ansprüche, bei dem die Einmündung(en) durch wenigstens teilweise im Übergang zwischen zwei aufeinanderfolgenden Lamellen (27) einer in Form einer ersten feststehenden schrägen Fläche gebildeten Spanabfuhrfläche (26) oder in Form von gestanzten und aufgebogenen Öffnungen einer planaren Oberfläche gebildet ist/sind.

8. Verfahren nach einem der vorhergehenden Ansprüche, bei dem ein oder mehrere Abschnitte vorgesehen sind, in denen von einer Auslenkstelle rückströmende Flüssigkeit räumlich von einer von einer in Abfuhrrichtung nachfolgenden Auslenkstelle rückströmenden Flüssigkeit getrennt parallel zu dieser zurückströmt, wobei die Abfuhrbahn an diesen Parallelstromabschnitten insbesondere einen einer Auflagenentzugsstelle vorgelagerten Rampenabschnitt aufweist.

9. Verfahren nach Anspruch 8, bei dem die Barriere durch den vorgelagerten Rampenabschnitt (27B) und/oder einen Grundabschnitt (27A) gebildet ist.

10. Spanabfuhreinrichtung (60) zur Spanabfuhr der bei einer auf einer Maschine ausgeführten spanabhebenden Erzeugung oder Bearbeitung eines Werkstücks anfallenden Späne, wobei die Spanabfuhreinrichtung ein endlos umlaufendes Band (9) mit mitbewegten Magneten (10) aufweist und ausgelegt ist zur Abführung der Späne mittels einer magnetischen Krafteinwirkung entlang einer durch eine erste feststehende schräge Fläche (26) gebildeten Abfuhrbahn (26) entgegen der Hangabtriebskraft, die einen durch die Hangabtriebskraft verursachten Rückstrom der von den abgeführten Spänen mitgeführten Flüssigkeit erlaubt, wobei die Spanabfuhreinrichtung wenigstens eine Auslenkstelle (24) aufweist, an der der Flüssigkeitsrückstrom aus der Abfuhrbahn heraus ausgelenkt wird und insbesondere wenigstens eine Auflageentzugsstelle (23) aufweist, an welcher den abgeführten Spänen zeitweise ihre abstützende Auflage entzogen ist,
**dadurch gekennzeichnet, dass** in Schwererichtung unter der ersten feststehenden Fläche (26) ein Rückströmraum (25) mit Einmündungen (22) für die rückströmende Flüssigkeit vorgesehen ist, nach deren Passieren die rückströmende Flüssigkeit auf einer zweiten feststehenden schrägen Fläche nach unten läuft, wobei die Spanabfuhreinrichtung mit Barrieren (27, 27A, 27B) zwischen der Abfuhrbahn und den Einmündungen ausgestattet ist.

11. Spanabfuhreinrichtung nach Anspruch 10, gebildet durch Aufsetzen eines Aufsatzes (50, 50') auf eine Begrenzungsfläche der auf magnetischer Krafteinwirkung basierenden Fördereinrichtung, wobei der Aufsatz (50, 50') eine die Abfuhrbahn für die abgeführten Späne bildende Abfuhrfläche aufweist, insbesondere mit Abstandshaltern zur Schaffung eines Rückstromraums zwischen der Begrenzungsfläche und der Rückseite der Abfuhrfläche, wobei die Einmündungen zu dem beim Aufsetzen des Aufsatzes zwischen der Begrenzungsfläche und der Rückseite der Abfuhrfläche gebildeten Rückströmraums vorgesehen sind, und die Barrieren zwischen der Abfuhrbahn und den Einmündungen vorgesehen sind.

12. Maschine zur spanabhebenden Erzeugung oder Bearbeitung eines Werkstücks mittels eines Bearbeitungswerkzeugs, mit einer Zuführeinrichtung für eine zur Schmierung und/oder Kühlung der Bearbeitung eingesetzte Flüssigkeit, einem Sammelbereich, in dem sich die mit den bei der Bearbeitung entstehenden Spänen vermengte Flüssigkeit sammelt, und einer nach Anspruch 10 oder 11 ausgebildeten Spanabfuhreinrichtung.

13. Maschine nach Anspruch 12, bei der die erste feststehende Fläche mit einem oder mehreren Grundabschnitten und einem oder mehreren sich von den Grundabschnitten erstreckenden Rampenabschnitten mit zu den Grundabschnitten größerer mittlerer Steigung ausgestattet ist, zwischen denen und dem jeweilig nachfolgenden Grundabschnitt insbesondere die Auflageentzugsstelle (23) angeordnet ist.

## Claims

1. A method for the chip-removing production or machining of a workpiece, in particular of toothing on a workpiece (71), by means of a machining tool, in particular a toothing tool (81), wherein a liquid (20) which mixes and accumulates with the chips (30) generated during the machining is used for lubricating and/or cooling during the machining, and wherein the chips are discharged from the accumulation, counter to the downhill force, along a discharge path by means of a magnetic force, wherein a return flow of the liquid carried away by the discharged chips occurs due to the downhill force, wherein the return flow is deflected out of the discharge path,
**characterised in that** the liquid in the return flow feeds into a return-flow space (25) via one or more openings (22), said return-flow space being arranged underneath the discharge path, as viewed in the direction of gravity, and the discharge path is separated from the one or more openings by a barrier.

2. The method according to claim 1, wherein the magnetic force is created by first regions with a strong magnetic field which move along the discharge path in the discharge direction and which are separated by second regions with a lower magnetic field.

3. The method according to claim 2, wherein at least two deflection points (24) are provided along the discharge path, and the ratio of the spacing between two consecutive deflection points in the discharge direction to the spacing between two consecutive first regions in the discharge direction is preferably less than 1/(1+γ α), where the factor γ is at least 1/5, preferably at least 1/3, in particular at least 1/2 and α is the ratio of the speed of the movement of the first regions to the return-flow speed of the liquid.

4. The method according to claim 3, wherein at least two consecutive deflection points are provided which meet the condition for their spacing defined in claim 3, and in particular two such deflection points are the first deflection points along the discharge path.

5. The method according to one of the preceding claims, wherein the discharge path has at least one point (23) at which the supporting surface is temporarily withdrawn from the discharged chips, and wherein in particular a plurality of support withdrawal points (23) are provided along the discharge path.

6. The method according to claim 5, wherein each deflection point (24) is assigned to one support withdrawal point (23).

7. The method according to one of the preceding claims, wherein the one or more openings are formed by openings formed at least in part in the transition between two consecutive segments (27) of a chip discharge surface (26) formed in the form of a first fixed oblique surface or are formed in the form of punched and bent openings of a planar surface.

8. The method according to one of the preceding claims, wherein one or more portions are provided in which liquid flowing back from a deflection point flows back, spatially separated from and parallel to a liquid flowing back from a subsequent deflection point, as viewed in the discharge direction, wherein the discharge path has a ramp portion at these parallel flow portions, in particular a ramp portion upstream of a support withdrawal point.

9. The method according to claim 8, wherein the barrier is formed by the upstream ramp portion (27B) and/or a base portion (27A).

10. A chip discharge device (60) for discharging the chips generated during a chip-removing production or machining of a workpiece on a machine, wherein the chip discharge device has an endlessly revolving belt (9) with co-rotating magnets (10) and is configured to discharge the chips, by means of a magnetic force, along a discharge path (26) formed by a first fixed oblique surface (26) counter to the downhill force, which allows a return flow, caused by the downhill force, of the liquid transported with the discharged chips, wherein the chip discharge device has at least one deflection point (24) at which the liquid return flow is deflected out of the discharge path and in particular has at least one support withdrawal point (23) at which the supporting surface is temporarily withdrawn from the discharged chips,
**characterised in that** a return-flow space (25) with openings (22) for the liquid in the return flow is provided underneath the first fixed surface (26), as viewed in the direction of gravity, and once the liquid in the return flow has passed through these openings it flows downwards on a second fixed oblique surface, wherein the chip discharge device is equipped with barriers (27, 27A, 27B) between the discharge path and the openings.

11. The chip discharge device according to claim 10, formed by placing an attachment (50, 50') on a boundary surface of the conveying device that is based on magnetic force, wherein the attachment (50, 50') has a discharge surface forming the discharge path for the discharged chips, in particular with spacers to create a return-flow space between the boundary surface and the rear side of the discharge surface, wherein the openings to the return-flow space formed between the boundary surface and the rear side of the discharge surface as a result of putting the attachment in place are provided, and the barriers between the discharge path and the openings are provided.

12. A machine for the chip-removing production or machining of a workpiece by means of a machining tool, said machine comprising a supply device for a liquid used for lubricating and/or cooling during the machining, a collecting area in which the liquid mixed with the chips generated during machining collects, and a chip discharge device configured according to claim 10 or 11.

13. The machine according to claim 12, wherein the first fixed surface is equipped with one or more base portions and one or more ramp portions which extend from the base portions and have a steeper average gradient relative to the base portions, between which ramp portions and the respective subsequent base portion the support withdrawal point (23) in particular is arranged.

## Revendications

1. Procédé de production ou d'usinage d'une pièce par enlèvement de copeaux, notamment d'une denture sur une pièce (71), au moyen d'un outil d'usinage, notamment d'un outil de taillage de dentures (81), dans lequel on utilise un liquide (20) pour lubrifier et/ou refroidir l'usinage, lequel liquide se mêle et s'accumule avec les copeaux (30) créés pendant l'usinage, et dans lequel les copeaux sont évacués de l'accumulation sous l'action d'une force magnétique le long d'un chemin d'évacuation contre la force de déclivité, étant entendu qu'en raison de la force de déclivité, il se produit un reflux du liquide transporté par les copeaux évacués, ledit reflux étant dévié hors du chemin d'évacuation,
**caractérisé en ce que** le liquide refluant débouche dans un espace de reflux (25) situé sous le chemin d'évacuation, vu dans le sens de la gravité, et le chemin d'évacuation est séparé d'une ou plusieurs embouchures (22) par une barrière.

2. Procédé selon la revendication 1, dans lequel la force magnétique est produite par des premières zones à fort champ magnétique qui se déplacent le long du chemin d'évacuation dans le sens de l'évacuation et qui sont séparées par des deuxièmes zones à champ magnétique plus faible.

3. Procédé selon la revendication 2, dans lequel au moins deux points de déviation (24) sont prévus le long du chemin d'évacuation, et le rapport entre la distance séparant deux points de déviation successifs dans le sens de l'évacuation et la distance séparant deux premières zones successives dans le sens de l'évacuation est de préférence inférieure à 11(1+γ α), où le facteur γ est d'au moins 1/5, de préférence d'au moins 1/3, en particulier d'au moins 1/2 et α désigne le rapport entre la vitesse du déplacement des premières zones et la vitesse de reflux du liquide.

4. Procédé selon la revendication 3, dans lequel il est prévu au moins deux points de déviation successifs qui satisfont à la condition concernant leur distance définie dans la revendication 3, et en particulier deux de ces points de déviation consistent en les premiers points de déviation le long du chemin d'évacuation.

5. Procédé selon l'une des revendications précédentes, dans lequel le chemin d'évacuation présente au moins un point (23) auquel les copeaux évacués sont temporairement privés de leur support sous-jacent, une pluralité de points dépourvus de support (23) étant notamment fournis le long du chemin d'évacuation.

6. Procédé selon la revendication 5, dans lequel un point de déviation (24) est associé à un point dépourvu de support (23) respectif.

7. Procédé selon l'une quelconque des revendications précédentes, dans lequel la ou les embouchures sont formées par des ouvertures formées au moins partiellement à la transition entre deux lamelles (27) successives d'une surface d'évacuation de copeaux (26) constituée sous la forme d'une première surface stationnaire inclinée ou sont formées sous la forme d'ouvertures d'une surface supérieure plane produites par poinçonnage et recourbées.

8. Procédé selon l'une quelconque des revendications précédentes, dans lequel il est prévu une ou plusieurs portions dans lesquelles le liquide refluant d'un point de déviation reflue parallèlement au liquide refluant d'un point de déviation qui lui est successif, vu dans le sens de l'évacuation, en étant spatialement séparé de ce dernier, le chemin d'évacuation présentant, au niveau de ces portions d'écoulement parallèles, notamment une portion en rampe située en amont d'un point dépourvu de support.

9. Procédé selon la revendication 8, dans lequel la barrière est formée par la portion de rampe amont (27B) et/ou une portion de base (27A).

10. Dispositif d'évacuation de copeaux (60) pour l'évacuation des copeaux issus de la production ou de l'usinage, sur une machine, d'une pièce par enlèvement de copeaux, le dispositif d'évacuation de copeaux présentant une courroie sans fin (9) dotée d'aimants (10) qui tournent avec celle-ci et étant conçu pour évacuer les copeaux sous l'action d'une force magnétique le long d'un chemin d'évacuation (26) formé par une première surface inclinée stationnaire (26) contre la force de déclivité, qui permet un reflux, provoqué par la force de déclivité, du liquide transporté par les copeaux évacués ; ledit dispositif d'évacuation de copeaux présentant au moins un point de déviation (24) auquel le reflux de liquide est dévié hors du chemin d'évacuation, et présentant notamment au moins un point dépourvu de support (23) auquel les copeaux évacués sont temporairement privés de leur support sous-jacent,
**caractérisé en ce qu'**il est prévu sous la première surface stationnaire (26), vu dans le sens de la gravité, un espace de reflux (25) doté d'embouchures (22) pour le liquide refluant qui, après les avoir traversées, s'écoule vers le bas sur une deuxième surface inclinée stationnaire, ledit dispositif d'évacuation de copeaux étant équipé de barrières (27, 27A, 27B) entre le chemin d'évacuation et lesdites embouchures.

11. Dispositif d'enlèvement de copeaux selon la revendication 10, formé par mise en place d'un accessoire (50, 50') sur une surface de délimitation du dispositif de transport reposant sur la force magnétique, l'accessoire (50, 50') présentant une surface d'évacuation formant le chemin d'évacuation destiné aux copeaux évacués, comportant notamment des écarteurs pour créer un espace de reflux entre la surface de délimitation et la face arrière de la surface d'évacuation, les embouchures donnant sur l'espace de reflux formé lors de la mise en place de l'accessoire entre la surface de délimitation et la face arrière de la surface d'évacuation étant assurées, et les barrières entre le chemin d'évacuation et lesdites embouchures étant assurées.

12. Machine pour la production ou l'usinage d'une pièce par enlèvement de copeaux au moyen d'un outil d'usinage, comportant : un dispositif d'apport en liquide servant à la lubrification et/ou au refroidissement dudit usinage, une zone de collecte dans laquelle le liquide mêlé aux copeaux créés lors de l'usinage s'accumule, et un dispositif d'évacuation de copeaux configuré selon la revendication 10 ou 11.

13. Machines selon la revendication 12, dans laquelle la première surface stationnaire est équipée d'une ou plusieurs portions de base, ainsi que d'une ou plusieurs portions de rampe partant des portions de base et présentant une inclinaison moyenne plus forte que celle desdites portions de base, ledit point dépourvu de support (23), notamment, étant agencé entre ces portions et la portion de base subséquente.
